Europäisches Patentamt

(19) European Patent Office

Office européen des brevets

(11) Publication number : **0 460 815 A2**

(12) # EUROPEAN PATENT APPLICATION

(21) Application number : 91304269.3

(22) Date of filing : 13.05.91

(51) Int. Cl.⁵ : **G05D 16/20**

(30) Priority : 08.06.90 US 535092

(43) Date of publication of application :
11.12.91 Bulletin 91/50

(84) Designated Contracting States :
DE FR IT

(71) Applicant : BORG-WARNER AUTOMOTIVE,
INC.
6700 18 1/2 Mile Road P.O.Box 8022
Sterling Heights, Michigan 48311-8022 (US)

(72) Inventor : Miller, Alan L.
38 Horizon
Ithaca, New York 14850 (US)
Inventor : Fox, Robert A.
11709 Laurelview Drive
Montgomery, Ohio 45249 (US)
Inventor : Nogowski, Richard P.
104 North Main Street
Mt. Propect, Illinois 60056 (US)

(74) Representative : Allden, Thomas Stanley et al
A.A. THORNTON & CO. Northumberland
House 303-306 High Holborn
London WC1V 7LE (GB)

(54) **Pulse width modulated pressure control valve configuration.**

㉗ A pulse width modulated valve configuration which includes on-off solenoid valve, a piston/spring damper-accumulator, and a pressure transducer for pressure feedback is disclosed. The pulse width modulated valve configuration can be used as a substitute for a variable force solenoid valve which has internal pressure feedback and whose output pressure is proportional to the input command. The present invention is a direct replacement for the proportional device and the pulse width modulated valve to be selected without regard to the configuration of the driven system.

EP 0 460 815 A2

**Fig. 2**

## Background of the Invention

### Field of the Invention

This invention relates to a pulse width modulated pressure control valve configuration and more particularly to a pulse width modulated valve configuration which includes a pulse width modulated valve, a piston/spring damper-accumulator, and a pressure transducer for pressure feedback. The invention directly replaces variable-force solenoid valves typically used in feedback control systems. This device satisfies the same performance requirements of the proportional solenoid valves while significantly improving the required cost at high quantity.

### Background of the Prior Art

Prior art solenoid valve arrangements have been used to control the amount of fluid supplied to a fluid responsive actuator, such as a clutch on a brake mechanism used in a vehicle transmission. One particular way of controlling these solenoid valves has been to drive them with pulse-width-modulation. One such approach includes the use of a two stage valve assembly including a servo valve wherein an electrical input signal causes a displacement of a valve component in a precise manner as seen in U.S. patent 4,116,321 granted September 26, 1978. This patented apparatus is concerned with pressure regulation. With the patented apparatus, the valve output flow is not proportional to the control signal but to the integral of the control signal. In operation, the patented system requires a feedback signal from a point in the control loop which could be a pressure signal, a shaft torque, or the rotational speed of a shaft. The patented apparatus must be used in a closed loop system. Since the valve disclosed in the '321 patent is functionally equivalent to an integrator it always has a 90° phase lag.

Another solenoid valve arrangement used to control a fluid responsive actuator can be seen in U.S. Patent application Ser. No. 6,208 filed January 23, 1987. This particular application discloses a control system operated open loop. A two-stage valve assembly is driven by a Pulse Width Modulated circuit which provides an alternating output signal of which the duty cycle may be varied to effect the position of a spool of one stage and thereby the flow of the actuator. Functionally, the valve assembly of Ser. No. 6,208 operates as a time lag element instead of an integrator. Such a system offers to the control system less phase lag than an integrator at lower frequencies.

### Summary of the Invention

In view of the above and in accordance with the present invention, there is provided a pulse width modulated valve configuration which includes a pulse width modulated valve, a piston/spring damper-accumulator, and a pressure transducer for pressure feedback. This configuration is a substitute for a variable-force solenoid valve which has internal pressure feedback and whose output pressure is proportional to the input command. The previously mentioned closed loop system utilizes a Pulse Width Modulated valve concept to control system response by using a feedback signal which comes from a system control parameter specifically derived from the physical system and not directly associated with the valve itself. The Pulse Width Modulated Pressure Control Valve Configuration is a device with broad application to a multitude and a variety of systems with the need for a proportional pressure input.

In view of the above, a primary object of this invention is to directly replace proportional solenoid valves so that the selection of the driving valve is transparent to the driven system.

Another object of this invention is the provision of a device with broad applications to various systems with the need for a proportional pressure input.

Still another object of this invention is the provision of the valve for a pilot stage of an electrohydraulic control system at a reduced cost.

### Brief Description of the Drawings

Having in mind the above objects and other attendant advantages that would be evident from an understanding from this disclosure, the invention comprises the devices, combination, and arrangement of parts as illustrated in the presently preferred form of the invention which is hereinafter set forth in detail to enable those skilled in the art to readily understand the function, operation, construction and advantages of same when read in conjunction with the accompanying drawings in which:

FIG. 1 is a block diagram of a control system constructed in accordance with the inventive teaching.

FIG. 2 is a schematic illustration of the Pulse Width Modulated Control Valve configuration as used in a control system of the present invention.

FIG. 3 is a simplified illustration of a valve arrangement useful with the present invention.

FIGS. 4, 5 and 6 are graphical illustrations, useful in understanding the operation of the valve shown in FIGS. 2 and 3.

### DETAILED DESCRIPTION OF THE PRESENT INVENTION

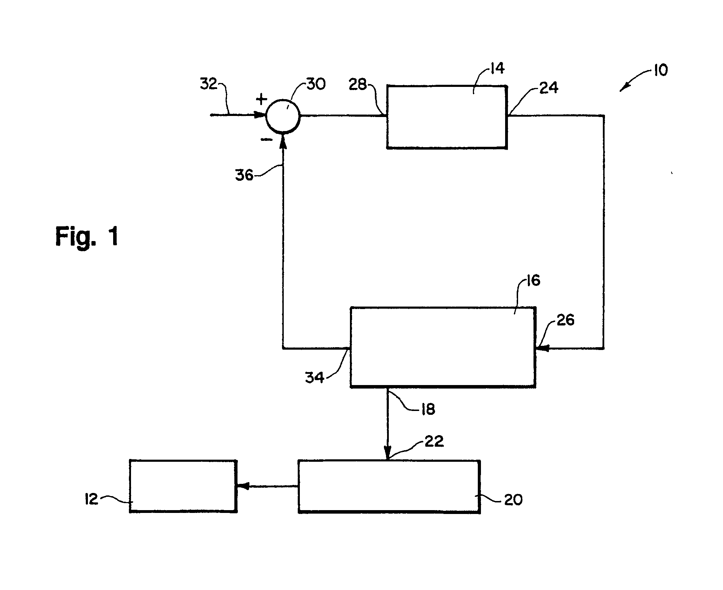

FIG. 1 illustrates a block diagram of a closed-loop negative feedback control system 10 for controlling the operation of a hydraulic device or an actuator 12. Control system 10 includes a controller 14 and a pulse width modulated control valve configuration 16 arranged in a closed-loop negative feedback configuration to generate a controlled fluid pressure at an output line 18 of control valve configuration 16. Output line 18 controls actuator 12 through the response of a pressure regulator 20 to the controlled fluid pressure at output line 18 which is coupled to a pressure regulator input 22. Actuator 12 could be coupled directly to output line 18, but the introduction of pressure regulator 20 permits the pressure developed at output line 18 to be amplified by pressure regulator 20, thereby permitting the control of actuators requiring higher pressure and/or flow inputs.

Control valve configuration 16 drives actuator 12 in response to a pulse width modulated driver signal generated by controller 14 at a controller output line 24. The pulse width modulated driver signal is received by control valve configuration 16 at a valve configuration input 26. An error signal received by controller 14 at a controller input line 28 results from the combination of two different signals which are summed at a comparison point 30. Comparison point 30 compares a pressure command signal or input control signal at a positive input line 32 with the negative value of a pressure feedback signal generated by valve configuration 16 at an output line 34 and received by a negative input 36 to comparison point 30.

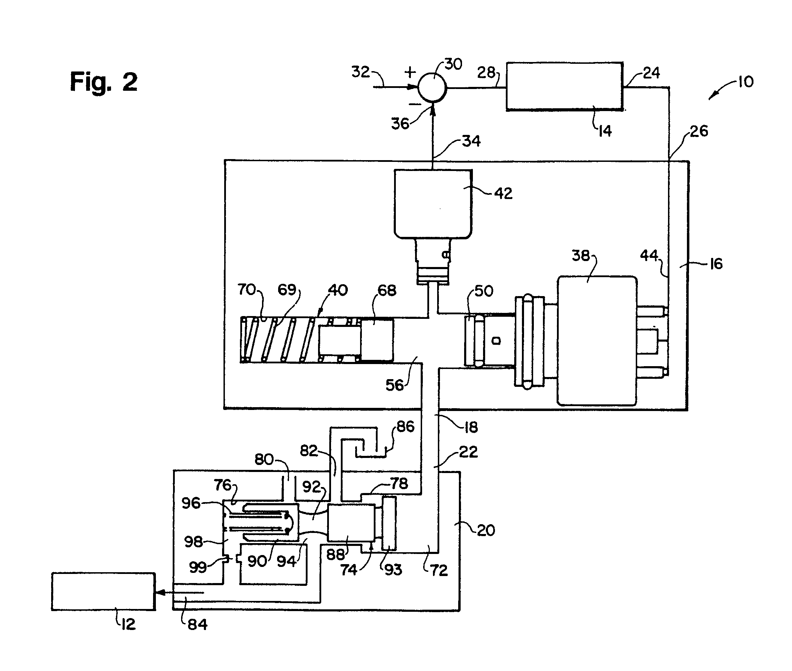

FIG. 2 illustrates a more detailed embodiment of PWM Control Valve Configuration 16 as used in control system 10. PWM Control Valve Configuration 16 includes an on-off solenoid valve or a pulse width modulated valve 38, a damper-accumulator 40, and a pressure transducer 42.

In operation, a signal input 44 of PWM valve 38 is coupled to valve configuration input 26. In response to an error signal received by controller 14 at controller input line 28, controller 14 generates a pulse width modulated driver signal which generates the duty cycle of PWM valve 38.

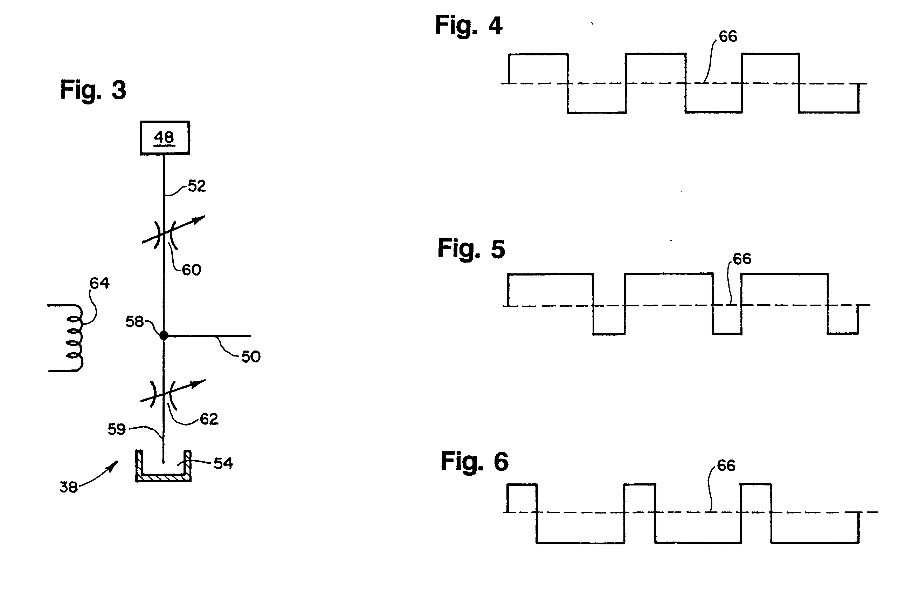

FIG. 3 is a simplified illustration of PWM valve 38. PWM valve 38 modulates fluid flow between a fluid source 48 and an output control port 50. Pilot fluid is released or valved by output control port 50 through the action of controller 14. The fluid source 48 may be in the form of a pump or other fluid supply unit. PWM valve 38 is adapted to receive fluid under pressure from fluid source 48 over a line 52. In the illustrated embodiment, PWM valve 38 has a plurality of outlets. One of these outlets drains fluid to a sump or a reservoir 54. Output control port 50 is coupled to a pilot fluid chamber 56 (seen in FIG. 2.) and through pilot fluid chamber 56 also to pressure regulator 20, damper-accumulator 40, and pressure transducer 42.

PWM valve 38 is an open center arrangement having a common point 58. The basic valve design is simple in that flow from fluid source 48 is either diverted to the output control port 50 of valve 38 or to an exhaust 59 merely by opening and closing a poppet against a valve seat in response to the energizing of a coil or the action of a return spring.

Valve 38 uses a combination of a first orifice 60 and a second orifice 62, the flow through first orifice 60 and second orifice 62 controlled by a pulse width modulated signal to effect the desired fluid flow. The first orifice 60 and the second orifice 62 work alternately such that when one of the orifices is closed, the other orifice is open. Consequently, when first orifice 60 is open, fluid flow is through line 52 and output control port 50. When second orifice 62 is open, fluid flow is through output control port 50 and exhaust 59.

As indicated in FIGS. 4, 5 and 6, the duty cycle of the PWM signal generated by controller 14 changes according to the values of the pressure command and the pressure feedback signals. PWM valve 38 responds to the duty cycle of the alternating signal provided by controller 14 and applied to a solenoid winding 64. As seen in FIGS. 4, 5 and 6, the PWM signal has a constant time period (or frequency) and a variable duty cycle. The portion of the waveform above a broken line 66 represents energization time of the solenoid winding 64. The flow rate through first orifice 60 and second orifice 62 will be either zero or a maximum value as a function of the duty cycle of the PWM signal. In one preferred form, reducing the duty cycle effectively increases the flow rate through second orifice 62. As the flow rate through second orifice 62 is modulated so is the flow rate change at common point 58, with a consequent change in pressure in pilot fluid chamber 56. In operation, the duty cycle of the alternating PWM signal at input 44 of PWM valve 38 controls the average flow to fluid chamber 56. When PWM valve 38 is pulsed at a high frequency, typically 50 Hertz, the resulting pressure at line 50 will be proportional to the duration of the pulse providing high pressure flow.

As shown in FIG. 2, output control port 50 is coupled to pilot fluid chamber 56. Pilot fluid chamber 56 couples output control port 50 to damper accumulator 40, pressure transducer 42, and pressure regulator 20. Since the response of the PWM valve 38 is usually such that nearly full pressure change is seen during one cycle, the magnitude of the pressure pulse must be diminished. Damper-accumulator 40 absorbs the pulsing energy of PWM valve 38 by deflection of a piston 68 against a spring 69, with piston 68 slidably engaged in a housing 70, thereby damping the pressure variations within pilot fluid chamber 56. The pressure value at output control port 50 is not smoothed out completely, but will have some small amount of dither around an average valve.

The damper-accumulator 40 has the surface areas of its piston 68 and the rate of its spring 69 matched to provide a high degree of damping at the PWM pulse frequency. However, the low frequency variations in duty cycle which are proportional to the control signal are not significantly damped, so that the damper-accumulator 40 highly attenuates pressure variations at the PWM pulse frequency while letting the low frequency duty cycle variations produce a corresponding analog variation in pressure in the pilot fluid chamber.

The output of pilot fluid chamber 56 is output line 18 of control valve configuration 16. Output line 18 delivers the analog output pressure of pilot fluid chamber 56 to pressure regulator 20. The function of pressure regulator 20 is to amplify the output pressure at output line 18 so that heavier loads can be driven by actuator 12. Pressure regulator 20 is not necessary when low power actuators are used in the control system.

To complete the operation of PWM valve configuration 16, pressure transducer 42 detects and measures the pressure buildup within pilot fluid chamber 56. Pressure transducer 42 generates an electrical signal indicating the pressure output of PWM valve 38. This electrical signal is combined at comparison point 30 with a pressure command to generate an error signal which controller 14 uses to control PWM valve 38.

Pressure transducer 42 is a sensor that, through recent developments in the art, can be made at low cost. Controller 14 takes the signal from pressure transducer 42, compares it to the pressure command signal indicating desired operation, and generates a driving duty cycle required for the pressure.

Pulse width modulated control valve configuration 16 is coupled to actuator 12 through pressure regulator 20. Pressure regulator input 22 is connected to output line 18, thereby connecting a hydraulic operator 72 of pressure regulator 20 with fluid chamber 56. Hydraulic operator 72 is defined by a closed center spool or a closure member 74 which is slidably arranged or accommodated in an elongated slideway 76 provided in a body portion 78 of the pressure regulator 20. The spool 74 regulates fluid flow between a line port 80 and either an exhaust port 82 or an output port 84. Exhaust port 82 is coupled to a sump 86 while output port 84 is connected to actuator 12.

Spool 74 has a first land 88 and a second land 90 connected by a stem 92 of comparatively smaller diameter. Connected to first land 88 is a piston 93. An annular space 94 surrounds stem 92 to allow output port 84 to communicate with either line port 80 or exhaust port 82 depending on the relative positions of first land 88 and second land 90.

As PWM valve 38 is pulsed to establish a pressure within pilot fluid chamber 56, spool 74 reacts and attempts to equalize the forces by moving within slideway 76. A mechanical resilient means 96, comprising a spring, impinges against an end wall of an end chamber 98 and against second land 90. The force exerted by fluid pressure within end chamber 98 acting against second land 90 coupled with the force developed by spring 96 tries to equalize with the force exerted by fluid pressure within chamber 56 acting against piston 93. This reaction between two opposing forces positions spool 74 within slideway 76. The restriction of fluid flow through a feedback orifice 99, by restricting flow between an annular space 94 and end chamber 98, provides a stabilizing effect on the pressure regulator 20 under dynamic conditions.

The position of spool 74 within slideway 76 controls the function of actuator 12. In operation, spool 74 slides to the left or right, as depicted in Fig. 2, depending on the pressure established within pilot fluid chamber 56 by PWM valve 38. Pressure regulator 20 operates to equalize the pressure differential existing between pilot fluid chamber 56 and the pressure at output line 84. To accomplish the equalization of pressures, spool 74 moves right or left either closing or opening line port 80 and exhaust port 82 so that actuator 12 is properly positioned. It is this equalization process which can change the pressure within pilot fluid chamber 56. This pressure is detected by pressure transducer 42 which in combination with the pressure command generates an error signal received by controller 14 at controller input line 28. In this way, the duty cycle of the PWM signal changes to accommodate changing pressures within pilot fluid chamber 56 resulting from the interaction of PWM valve 38 and pressure regulator 20. Consequently, the control of actuator 12 is accomplished by the closed loop system utilizing PWM control valve configuration 16, responding to a pressure command signal and the fluid pressure developed within pilot fluid chamber 56. This system permits the use of actuators which do not have sensors indicating actuator position or actuator pressure.

The foregoing description of the invention has been presented for purposes of illustration and description. It is not intended to limit the invention to the precise forms disclosed, and obviously many modifications and variations are possible in light of the above teachings.

## Claims

1. A control system for changing the pressure of a fluid to operate an actuator as a function of an analog control signal comprising:

an on-off solenoid valve having a winding for receiving an electrical signal to produce fluid pressure pulses at an output control port of said valve coupled to a fluid-filled chamber to produce a change in fluid pressure therein;

a means for sensing pressure coupled to said chamber producing a feedback signal proportional to the pressure within said chamber;

a means for damping coupled to said chamber to provide damping of said pressure pulses wherein said means for damping in combination with said valve produces an analog output pressure at an output of said fluid chamber;

means for comparing said feedback signal to a desired operation, and providing an analog control signal as a function of such comparison; and

a pulse width modulation controller connected to receive said analog control signal and to provide an output alternating signal the duty cycle of which is a function of said analog control signal, which alternating signal is applied to the solenoid winding to effect said on-off solenoid valve operation.

2. A control system as claimed in claim 1, including a pressure regulator coupled to said output of said fluid chamber and said pressure regulator controls the actuator of the control system.

3. A control system as claimed in claim 1, in which said means for damping includes a piston slidably engaged within a housing, wherein the travel of said piston is damped by a spring.

4. A control valve configuration for modulating fluid pressure to a hydraulic actuator, which can replace a pressure feedback variable force solenoid valve in an electrohydraulic control system comprising:

an on-off solenoid valve having a winding for receiving an electrical signal to produce fluid pressure pulses at an output control port of said valve connected to a fluid-filled chamber to produce a change in fluid pressure therein;

a means for sensing pressure connected to said chamber producing a feedback signal proportional to the pressure within said chamber; and

a means for damping connected to said chamber to provide damping of said pressure pulses wherein said means for damping in combination with said valve produces an analog output pressure at an output of said fluid chamber for controlling an actuator.

5. A control valve configuration as claimed in claim 4, in which said means for damping includes a piston slidably engaged within a housing, wherein the travel of said piston is damped by a spring.

6. A control valve configuration as claimed in claim 4, including a pressure regulator coupled to said output of said fluid chamber and said pressure regulator controls the actuator of the control system.

7. A method of regulating a control pressure in proportion to the duty cycle of a pulse width modulated (PWM) control signal having a pulse repetition frequency, comprising the steps of:

valving pilot fluid into a pilot fluid chamber in proportion to the output of said PWM signal;

damping the variations of pressure in said pilot fluid chamber of said pilot fluid at said pulse repetition frequency;

measuring the pressure of said pilot fluid in said pilot fluid chamber;

comparing said measured pressure with an input control signal; and

adjusting the duty cycle of said PWM signal in proportion to said comparison.

8. An apparatus for regulating a control pressure in proportion to the duty cycle of a pulse width modulated (PWM) control signal having a pulse repetition frequency, comprising:

means for valving pilot fluid into a pilot fluid chamber in proportion to the output of said PWM signal;

means for damping the variations of pressure in said pilot fluid chamber of said pilot fluid at said pulse repetition frequency;

means for measuring the pressure of said pilot fluid said pilot fluid chamber;

means for comparing said measured pressure with an input control signal; and

means for adjusting the duty cycle of said PWM signal in proportion to said comparison.

9. An apparatus for regulating a control pressure in proportion to the duty cycle of a pulse width modulated (PWM) control signal having a pulse repetition frequency as claimed in claim 8, wherein said means for damping includes a piston and a spring.

**Fig. 1**

**Fig. 2**

## Fig. 3

## Fig. 4

## Fig. 5

## Fig. 6

EP 0 460 815 A2